# EUROPEAN PATENT SPECIFICATION

(11) **EP 1 950 590 B1**
(45) Date of publication and mention of the grant of the patent: **17.07.2013**
(21) Application number: 08100418.6
(22) Date of filing: 14.01.2008
(51) Int. Cl.: G02B 6/38

(54) **Device for connecting appliances to optical fibers and method of forming such a device**
Vorrichtung zum Anschließen von Geräten an Lichtwellenleiter und Verfahren zur Herstellung einer solchen Vorrichtung
Dispositif pour la connexion d'équipement à des fibres optiques et procédé de fabrication d'un tel dispositif

(30) Priority: 29.01.2007 NL 2000456
(43) Date of publication of application: 30.07.2008
(73) Proprietor: Genexis Holding B.V., 5652 AC Eindhoven (NL); Bti Bremi teletronica industrie B.V., 5521 dj Eersel (NL)
(72) Inventor: van den Hoven, Gerard Nicolaas, NL-6105 BP, Maria Hoop (NL); Stassar, Pierre Jean Johannes, NL-1273 GA, Huizen (NL); van de Ven, Jacobus Henricus Wilhelmus, NL-5525 AG, Duizel (NL); Brekelmans, Frank Edward, NL-5521 CV, Eersel (NL)
(74) Representative: DeltaPatents B.V.

(56) References cited:
- EP-A1- 0 938 006
- EP-A1- 1 275 993
- EP-A2- 1 092 996
- DE-A1- 10 114 144
- FR-A1- 2 688 897
- US-A- 6 058 235
- US-A1- 2005 185 894

## Description

### BACKGROUND OF THE INVENTION

The invention relates to a device for connecting appliances to optical fibers, in which device signals received from fibers are converted into signals suitable for said appliances by means of at least one user module, wherein the device in the assembled state forms a closed box-type unit that comprises the at least one user module and wherein the at least one user module is provided with a connector to which a complementary connector provided with an optical fiber is joined.

Such a device forms an end station or terminal of an optical waveguide network that is highly suitable for transporting large quantities of data at high speed. Optical fibers were initially used mainly for transport between main stations and distribution stations, from where electrical signals obtained through conversion were transported to users in a home or office. If an optical waveguide network is to be utilized to its full capacity, the glass fibers should continue right up to such a home or office, and a device of the kind mentioned in the opening paragraph is to be installed there, through which then one or several services can be offered. The electrical signals obtained after conversion in said device are guided to individual appliances. Such a device is also denoted a "Fiber to the Home" or FttH terminal. Said services may be, for example, a telephone connection, a TV and/or radio connection, or may relate to the exchange of data, such as an Internet connection.

Such a device must be suitable for various users with various requirements, i.e. a user can decide for him/herself which of the offered services he/she wishes to use. The device should be readily adaptable to the wishes of the users and/or to those of the service providers. Furthermore, the device should be satisfactorily safeguarded such that a user only uses services for which he/she is authorized. The device should in addition be small and light and easy to mount in various locations.

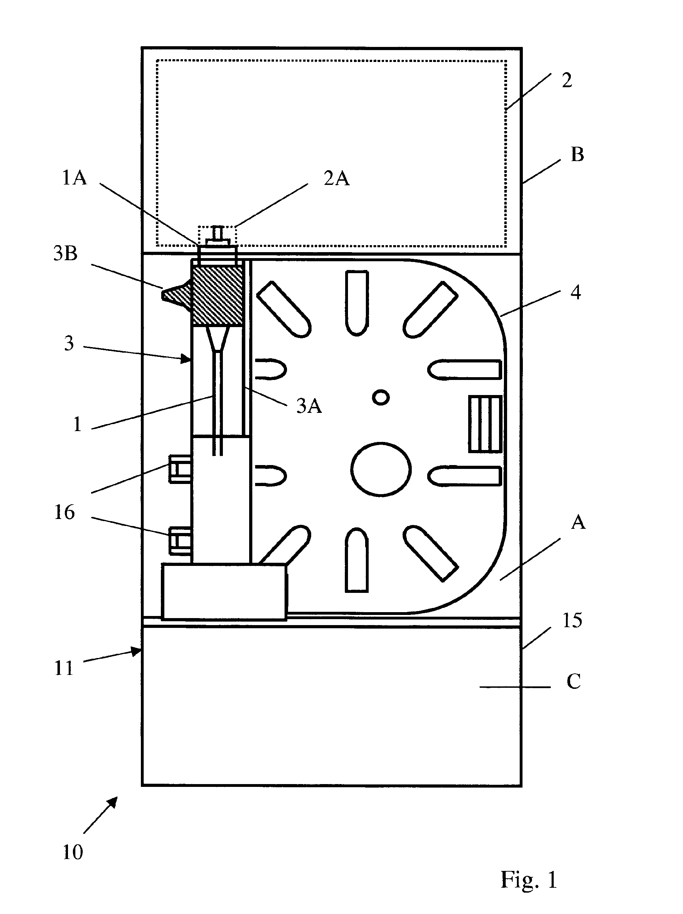

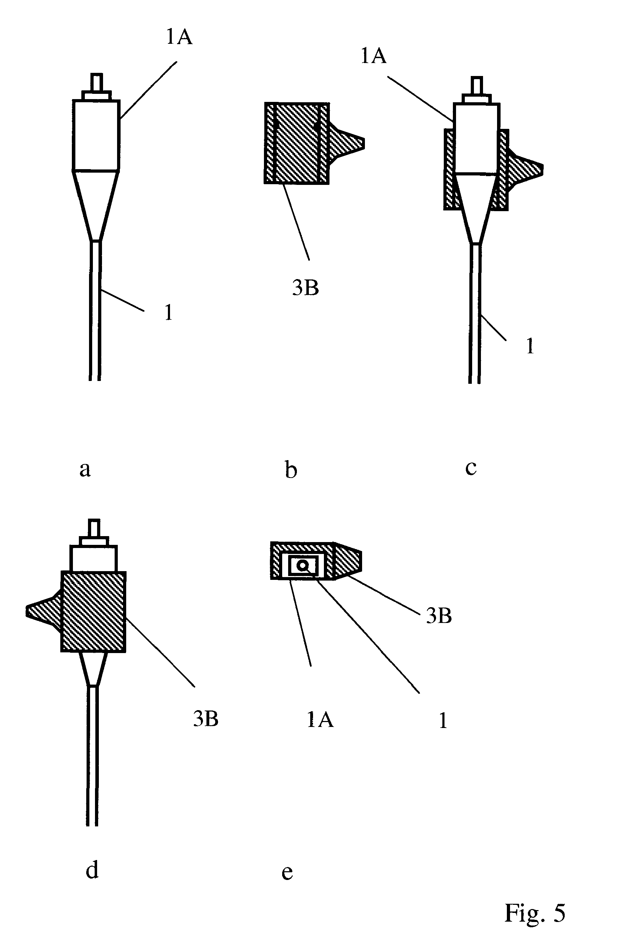

Such a device is known from the patent US 6,058,235 published on May 2nd, 2000. This shows how a PCB-type user module 24 (cf. Fig. 5) is passed into a mating part of the device. An electrical contact is established during this (cf. Fig. 1) at the rear between the PCB and the device. At the upper side of the module 24 there is a connector part 26, 28 (see again Fig. 5) to which a corresponding connector 74, 76 is connected which in its turn is connected to a glass fiber 73, 75 that issues from a fiber cable tree 72.

It is a disadvantage of the known device that it is comparatively expensive in use. Thus a consumer wishing to extend his/her (range of) services will have to commission a second, third, etc. user module for that purpose each time. It is advantageous for the purchase price of the device if such a module is not yet present in the device from the beginning. Also, an unauthorized consumption of services is counteracted thereby. In the situation described here, the consumer/user asking the provider for an additional service will receive a visit from an engineer who installs the relevant module in the device present at the consumer/user's. Various drawbacks are connected with this, such as the expense of the installation of the additional module.

### SUMMARY OF THE INVENTION

It is accordingly an object of the present invention to provide such a device which is comparatively inexpensive and which in particular can be provided with a - possibly additional - user module in an inexpensive manner.

According to the invention, a device of the kind mentioned in the opening paragraph is for this purpose characterized in that the device is provided with guide means, which means are located opposite the connector of the at least one user module after this at least one user module has been mounted in the box-type unit, and by which means the guiding of the complementary connector to the connector and the connection of the one to the other are mechanized at least in part.

The invention is based on the recognition first of all that the commissioning of a - possibly additional- module requires the work of an engineer for connecting such a module to a glass fiber connector. This is because of the vulnerable character of a glass fiber and the accompanying components such as a complementary connector. This in its turn is related to the fact that the users or consumers are not familiar with theses matters. The invention is further based on the recognition that it is difficult to introduce the user module into the unit while creating, for example, an optical connection at the same time as and parallel to an electrical connection. This is related to the fact that an electrical and an optical connection involve very different tolerances, an optical connection being especially critical and having very narrow tolerances. Furthermore, a user module is comparatively large, whereas a glass fiber is comparatively small, for which reason alone it is not very well possible to plug the user module onto a fixedly positioned glass fiber. All this becomes even more difficult if during the insertion of the user module also an electrical coupling of the module, as known from the prior art, to an electrical female connector is to be achieved. The insertion of the module may fail or damage may be caused. Finally, the invention is based on the recognition that the provision of guide means for the complementary connector facilitates the creation of a coupling between the glass fiber (connector) and the connector of the user module to such a considerable extent that a user or consumer can achieve this him/herself without the aid of an engineer. This is because now a small component (the fiber connector) is to be inserted into a large component (the module) instead of the other way about. This means that less strict requirements need be imposed on the accuracy of the components and the coupling action. This has major advantages for the ease of use and the price of the device according to the invention.

The guide means may be constructed such that a user or consumer can easily create the desired coupling between the fiber connector and the user module connector by hand. This implies that said coupling is at least partly mechanized. The device according to the invention provides the possibility of further mechanization. Thus the displacement and coupling actions may alternatively be achieved by means of a spring. The spring may be provided with a locking mechanism that can be released by the user or consumer with a simple pressure of a finger. The release of the lock may alternatively be effected simply by the introduction of the (additional) user module into the unit. Coupling of the fiber to this module has thus as it were been fully mechanized.

According to the invention, the guide means comprise a rail to which the complementary connector with the glass fiber is coupled. This defines the direction of displacement of the complementary connector with the glass fiber, and lateral displacements relative to this direction are suppressed or at least reduced. The same holds for an angular change of the fiber connector relative to the user module connector.

The rail may be, for example, I-shaped, an upper part of the I-shape then lying in a corresponding recess in the complementary connector. Preferably, however, the rail is tubular in shape, the complementary connector with the fiber is present therein, and the tubular rail is provided at at least one longitudinal side with a slotted opening through which the complementary connector is accessible to, for example, the finger of a hand such that this connector can be displaced through the rail.

The guide means comprise a clamping body in which the complementary connector with the fiber is accommodated and which is provided with a projection acting as a handle that projects through the slotted opening from the tubular rail and that fits in the rail with sliding possibility. In this manner a desired displacement of the fiber connector can still be readily achieved with a single slotted opening.

In a further advantageous embodiment, the guide means are fastened to a plate that forms a cover plate for a compartment of the unit within which a looped portion of the fiber is present. In this manner a single component can suffice for providing the guiding function and the protection of one or several loops of glass fiber that may be present. The glass fiber can be conducted from the space below the cover plate through an opening in this plate at the area of the guide means to the complementary connector.

Preferably, the cover plate is fastened to the unit in a detachable and pivoting manner. This renders the unit comparatively simple and also suitable for initial or alternative special preparation (repair or replacement of a fiber or a glass weld therein) by an engineer. It can be prevented relatively easily that a user or consumer obtains access to the glass fiber compartment in that the cover plate is connected to the rest of the unit and closed with a seal. In any case, a broken seal can be readily observed. The cover plate provided with the rail may be manufactured in one piece from synthetic resin material, preferably a (comparatively) transparent material.

An important embodiment is characterized in that the box-type unit comprises a further compartment in which a plurality of user modules for appliances to be connected is present, which user modules can be individually inserted and removed, and which further compartment comprises a separate appliance connector for each user module, and in that guide means are present in front of the connector of each user module. Preferably, the glass fiber compartment with the cover plate provided with the guide means thereon and the further compartment with the user modules lie side by side when viewed in projection.

Preferably, the guide means are equally useful in detaching the complementary connector from the connector of the at least one user module. This means that a module can be readily replaced, either permanently with a more advanced one or temporarily in the case of repairs.

The guide means render possible a manual displacement of the complementary connector from a first position remote from the user module into a second position in which the complementary connector is inserted in the connector. Said first position will have to be at least so far removed from the (position of) the user module that the latter can be easily placed in the unit or be removed therefrom again. The guide means themselves should also be at least at a distance such that a (renewed) placement or removal of the module is readily possible. This means in practice that initially the complementary connector is present in the guide means at a distance of preferably at least a few millimeters from the connector position. This distance will typically and advantageously be a few centimeters, with an upper limit of approximately 10 cm, which is determined inter alia by the dimensions of the unit or the compartment. The exact position of the module may be defined, for example, by projections present in the wall of the box. A construction as in the known device is also possible.

As in the known device, a module may advantageously be electrically connected to the unit while being placed. When stacked together, the modules may be interconnected each time by means of suitable (counter)connectors. The lowermost module, which in that case preferably comprises a supply unit, will then be electrically connected to the device, at least to the power supply terminal present therein. The (electrical) appliance connection terminals for the appliances are preferably arranged in a side wall of the box-type unit in the form of openings provided therein which each afford access to a corresponding electrical signal connector in the respective user module.

A method of forming a terminal for connecting appliances to optical fibers according to claim 8.

### SHORT DESCRIPTION OF THE DRAWINGS

These and further aspects of the invention will become clear from the ensuing description of embodiments, which is given purely by way of example. Reference is made to the drawings, in which:
Fig. 1 is a plan view of an embodiment of the device in the open state;
Fig. 2 presents two side elevations of the components of a box of this device during assembly;
Fig. 3 is a plan view of a cover plate of this device;
Fig. 4 presents two side elevations of the cover plate of Fig. 3; and
Fig. 5 presents four side elevations and a plan view of a component of the device.

### DETAILED DESCRIPTION OF THE PREFERRED EMBODIMENTS

Fig. 1 shows in a plan view an embodiment of a device 10 according to the invention in assembled state. This device comprises a box 11 of which the bottom is formed by a bottom or base plate 12, while the upper side and the lateral sides are formed by a lid (not shown in the drawing). The box 11 here has three compartments A, B, C which are separated from one another by a partitioning wall provided with one or more openings. A cable (not shown) comprising a plurality of optical waveguide fibers enters the box 11 in the compartment C. From there the cable splits up into a number of glass fibers 1 which are present in the compartment A and are passed via a number of loops in the right-hand part of compartment A through an opening in the bottom of a transparent cover plate 4 so as to enter guide means 3 fastened to this cover plate. The guide means here comprise one or more tubular rails 3A, also transparent, which are arranged opposite a connector part (or parts) 2A of one (or several) user module(s) present in compartment B of the box 11.

The guide means 3 also comprise a clamping part 3B that is present in the tubular rail 3A and in which a ferrule connector 1A with the end of a glass fiber held therein is accommodated. The ferrule connector 1A, of the SC (Standard Connector or Subscriber Connector) type here, is complementary to the connector part 2A of a module and is inserted therein. The clamping part 3B has a portion that projects through an opening 17 in the side wall of the rail 3A, such that the ferrule connector 1A with the fiber 1 can be moved by hand to and fro in the rail 3A in the longitudinal direction thereof.

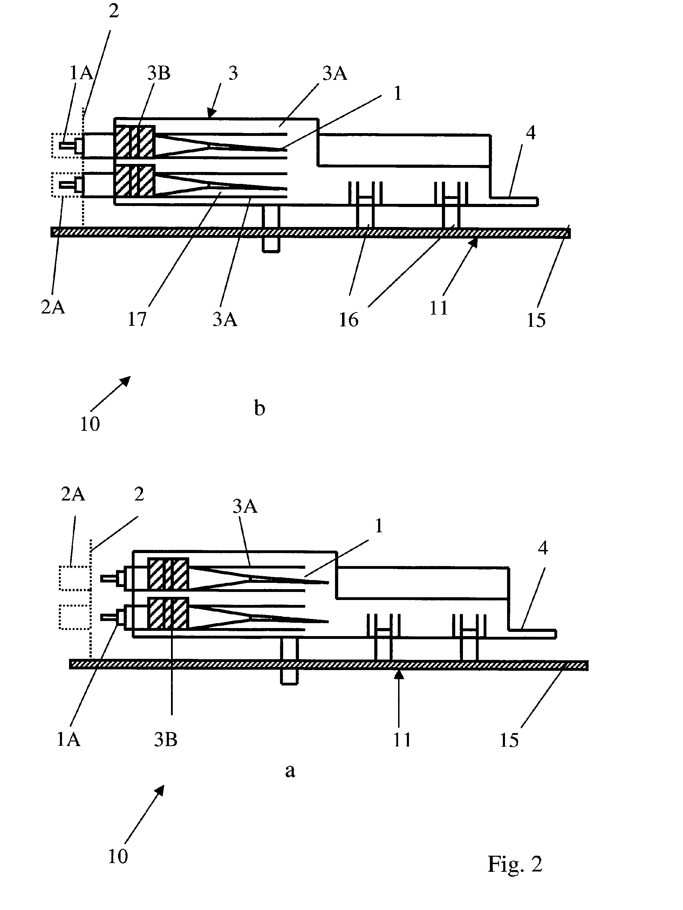

Fig. 2 gives two side elevations a, b of the device 10 with the clamping part 3B containing the ferrule 1A and fiber 1 in two different positions. Elevation a shows the box 11 with two clamping parts 3B, each with a ferrule 1A and fiber 1 in a tubular rail 3A, in a position in which these ferrules are not connected to user modules 2 provided with complementary connectors 2A. In elevation b, the clamping parts 3B with the ferrules 1A and the fibers 1 have been moved by hand to the left such that the ferrules 1A have entered the connectors 2A of the user modules 2, which are thus served with optical signals and can be used for connecting appliances (not shown), such as a TV set or a PC, to user modules 2. Owing to the construction and the method according to the invention as disclosed herein, no professional service engineer need be called upon to visit the user/consumer for the purpose of connecting (additional) user modules 2, but instead the user/consumer him/herself is capable of performing the partly mechanized commissioning actions by hand in a simple manner. The risk of an incorrect contacting of a module 2 or of damage to one or several components of the device 10, in particular to the glass fiber 1 or a component 1A connected thereto, is nil or at least very small.

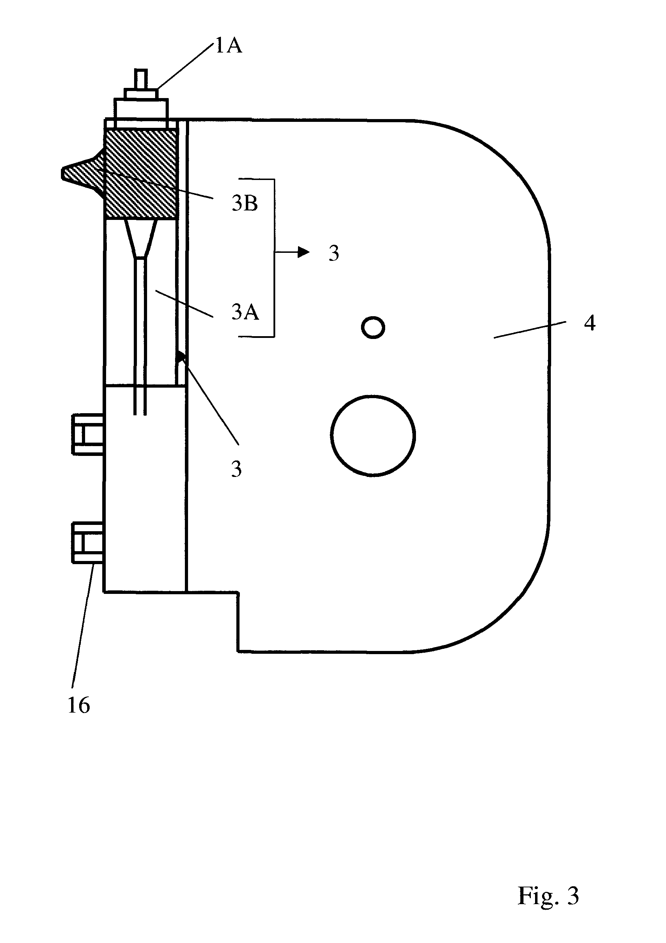

Fig. 3 is a plan view of the cover plate 4 provided with the guide means 3 of the device 10 of Fig. 1. Said components have been manufactured in one piece by injection molding from a (somewhat) transparent synthetic resin material such as ABC (=acrylonitrilbutadienestyrene). At a lateral side of the cover plate 4 there are hinge parts 16, also integral therewith, which can be fastened with clamping fit in the device 10.

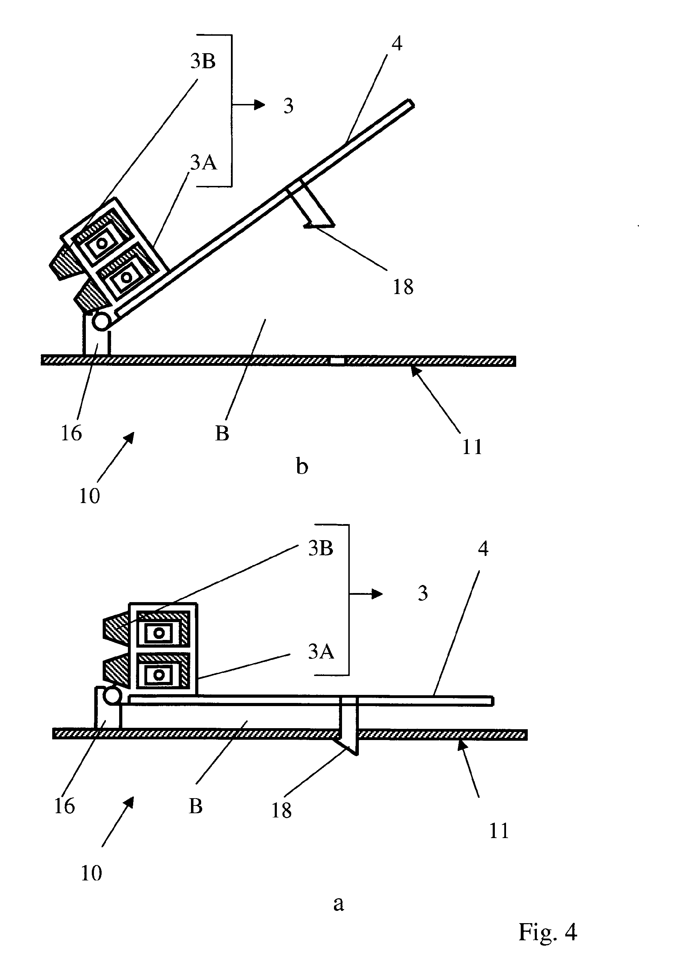

Fig. 4 presents two side elevations a, b of the cover plate 4 of Fig. 3. Side elevation a shows a portion of the compartment B in the closed state, wherein a clamping member 18 securely locks the cover plate 4 to the bottom plate 15 of the box 11. The cover plate can be pivoted into an open position about the hinge parts 16 (see side elevation b), such that the glass fiber components (not shown) present in that portion of the compartment B become accessible. The hinge parts 16 are detachably fastened to the box 11 by means of a further clamping connection (not shown), so that also the entire cover plate 4 with the guide means 3 attached thereto can be taken from the device 10. It is to be noted, however, that the cover plate 4 should preferably be fastened to the box 11 with a security seal, so as to prevent unauthorized persons from opening/removing the cover plate 4, or at least to signal such an event.

Fig. 5, finally, shows a component 3B of the guide means 3 of the device 10 according to this embodiment in four side elevations and one plan view. The clamping member 3B, which is provided with a projection (see side elevation b), has a U-shaped cross-section (see plan view e) and is capable of enclosing the ferrule 1A with the glass fiber 1 (see side elevation a) with clamping force (see side elevations c and d).

Further particulars on possible embodiments can be found in another Dutch patent application of the Applicant(s) which was published under no. NL 1 026 832 on February 14th, 2006.

The invention was described above with reference to preferred embodiments thereof. Those skilled in the art will appreciate that many changes and modifications may be applied thereto without departing from the scope of the accompanying claims. Said preferred embodiments should accordingly be regarded as illustrative rather than limitative, and no limitations are to be concluded other than those expressly stated in the accompanying claims.

Thus it is noted that the device may be installed at the user's in various orientations, such as against a wall in a posit ion rotated through 90° with respect to the drawing. The guide means for various user modules need not all be in (approximately) the same position and/or orientation. The start and/or end position of the complementary connector in the guide means may be provided with a snap lock or a signal lock. The locking in the end position may at the same time constitute a security seal. The complementary (optical) connector may be provided with a protective cap that is manually removed by the user or is automatically pivoted away during the displacement of the optical connector in the guide means.

It is finally noted that the device according to the invention also offers advantages when used and operated by a skilled engineer.

## Claims

1. A terminal (10) of an optical waveguide network for connecting appliances to optical fibers (1), in which terminal signals received from optical fibers (1) are converted into electrical signals suitable for said appliances by means of at least one user module (2), wherein the terminal (10) in the assembled state forms a closed box-type unit (11) that comprises the at least one user module (2) and wherein the at least one user module (2) is provided with a connector (2A) to which a complementary connector (1A) provided with an optical fiber (1) is joined, **characterized in that** the terminal (10) is provided with guide means (3), which means are located opposite the connector (2A) of the at least one user module (2) after this at least one user module (2) has been mounted in the box-type unit, and by which means the guiding of the complementary connector (1A) with the fiber (1) to the connector (2A) and the connection of the one to the other are mechanized at least in part, wherein
- the guide means (3) comprise a rail (3A) to which the complementary connector (1A) with the glass fiber (1) is coupled,
- the rail (3A) is tubular in shape, the complementary connector (1A) with the fiber (1) is present therein, and the tubular rail (3A) is provided at at least one longitudinal side with a slotted opening through which the complementary connector (1A) is accessible such that this connector can be displaced by hand through the tubular rail (3A),
- the guide means (3) comprise a clamping body (3B) in which the complementary connector (1A) with the fiber (1) is accommodated and which is provided with a projection acting as a handle that projects through the slotted opening from the tubular rail (3A) and fits in the rail (3A) with sliding possibility, and
- the guide means (3) render possible a manual displacement of the complementary connector (1A) from a first position remote from the user module (2) into a second position in which the complementary connector (1A) is inserted in the connector (2A).

2. A terminal (10) as claimed in any one of the preceding claims, **characterized in that** the guide means (3) are fastened to a plate (4) that forms a cover plate for a compartment (A) of the unit within which a looped portion of the fiber (1) is present.

3. A terminal (10) as claimed in claim 2, **characterized in that** the cover plate is fastened to the unit (11) in a detachable and pivoting manner.

4. A terminal (10) as claimed in claim 2 or 3, **characterized in that** the cover plate and the tubular rail (3A) are made of the same transparent synthetic resin material.

5. A terminal (10) as claimed in any one of the preceding claims, **characterized in that** the box-type unit (11) comprises a further compartment (B) in which a plurality of user modules (2) for appliances to be connected is present, which user modules can be individually inserted and removed, and which further compartment (B) contains a separate appliance connector for each user module (2), and **in that** guide means (3) are present in front of the connector of each user module (2).

6. A terminal (10) as claimed in claim 5, **characterized in that** the compartment and the further compartment lie side by side when viewed in projection.

7. A terminal (10) as claimed in any one of the preceding claims, **characterized in that** the guide means (3) can also be used in detaching the complementary connector (1A) from the connector (2A) of the at least one user module (2).

8. A method of forming a terminal (10) for connecting appliances to optical fibers (1), in which terminal (10) signals received from optical fibers (1) are converted into signals suitable for the respective appliances by means of at least one user module (2), wherein the terminal (10) in the assembled state forms a closed, box-type unit (11) that comprises the at least one user module (2) and wherein the at least one user module (2) is provided with a connector (2A) to which a complementary connector (1A) provided with an optical fiber (1) is joined, **characterized in that** the unit (11) is provided with guide means (3), which means are located opposite the connector (2A) of the at least one user module (2) after this at least one user module (2) has been mounted in the box-type unit (11), and by which means the complementary connector (1A) with the fiber (1) is guided towards the connector (2A) and is connected thereto in an at least partly mechanized manner, the guide means (3) render possible a manual displacement of the complementary connector (1A) from a first position remote from the user module (2) into a second position in which the complementary connector (1A) is inserted in the connector (2A), wherein the guide means (3) is provided with a rail (3A) to which the complementary connector (1A) with the glass fiber is coupled, the rail (3A) is tubular in shape, the complementary connector (1A) with the fiber (1) is provided therein, the tubular rail (3A) is provided at at least one longitudinal side with a slotted opening through which the complementary connector (1A) is accessible such that this connector can be displaced by hand through the tubular rail (3A), the guide means is also provided with a clamping body in which the complementary connector (1A) with the fiber (1) is accommodated and the clamping body is provided with a projection acting as a handle that projects through the slotted opening from the tubular rail (3A) and fits in the rail (3A) with sliding possibility.

## Patentansprüche

1. Ein Anschlussblock (10) eines Lichtwellenleiternetzes zum Anschließen von Geräten an Lichtleitfasern (1), wobei in diesem Anschlussblock Signale, die von Lichtleitfasern (1) empfangen werden, in elektrische Signale, die für die Geräte geeignet sind, anhand mindestens eines Benutzermoduls (2) umgewandelt werden, wobei der Anschlussblock (10) im zusammengebauten Zustand eine geschlossene kastenartige Einheit (11) bildet, die das mindestens eine Benutzermodul (2) umfasst, und wobei das mindestens eine Benutzermodul (2) mit einem Stecker (2A) versehen ist, mit dem ein passender Stecker (1A), der mit einer Lichtleitfaser (1) versehen ist, zusammengefügt wird, **dadurch gekennzeichnet, dass** der Anschlussblock (10) mit Führungsmitteln (3) versehen ist, wobei sich diese Mittel gegenüber dem Stecker (2A) des mindestens einen Benutzermoduls (2) befinden, nachdem dieses mindestens eine Benutzermodul (2) in der kastenartigen Einheit eingebaut wurde, und wobei durch diese Mittel das Führen des passenden Steckers (1A) mit der Faser (1) zu dem Stecker (2A) und das Anschließen des einen an den anderen mindestens teilweise mechanisiert werden, wobei
- die Führungsmittel (3) eine Schiene (3A) umfassen, mit welcher der passende Stecker (1A) mit der Lichtleitfaser (1) gekoppelt ist,
- die Schiene (3A) röhrenförmig ist, der passende Stecker (1A) mit der Faser (1) darin vorliegt, und die röhrenförmige Schiene (3A) mindestens auf einer Längsseite mit einer Schlitzöffnung versehen ist, durch die der passende Stecker (1A) derart zugänglich ist, dass dieser Stecker manuell durch die röhrenförmige Schiene (3A) verschoben werden kann,
- die Führungsmittel (3) einen Klemmkörper (3B) umfassen, in dem der passende Stecker (1A) mit der Faser (1) aufgenommen ist und der mit einem Vorsprung versehen ist, der als Griff dient, der durch die Schlitzöffnung der röhrenförmigen Schiene (3A) vorsteht und mit Gleitmöglichkeit in die Schiene (3A) passt; und
- die Führungsmittel (3) eine manuelle Verschiebung des passenden Steckers (1A) von einer ersten Position, die von dem Benutzermodul (2) entfernt ist, in eine zweite Position, in welcher der passende Stecker (1A) in den Stecker (2A) eingefügt ist, ermöglichen.

2. Ein Anschlussblock (10) nach einem der vorhergehenden Ansprüche, **dadurch gekennzeichnet, dass** die Führungsmittel (3) an einer Platte (4) befestigt sind, die eine Deckplatte für ein Fach (A) der Einheit bildet, in dem ein schleifenförmiger Teil der Faser (1) vorliegt.

3. Ein Anschlussblock (10) nach Anspruch 2, **dadurch gekennzeichnet, dass** die Deckplatte an der Einheit (11) abnehmbar und schwenkbar befestigt ist.

4. Ein Anschlussblock (10) nach Anspruch 2 oder 3, **dadurch gekennzeichnet, dass** die Deckplatte und die röhrenförmige Schiene (3A) aus dem gleichen transparenten Kunstharzmaterial hergestellt sind.

5. Ein Anschlussblock (10) nach einem der vorhergehenden Ansprüche, **dadurch gekennzeichnet, dass** die kastenartige Einheit (11) ein weiteres Fach (B) umfasst, in dem eine Vielzahl von Benutzermodulen (2) für anzuschließende Geräte vorhanden ist, wobei diese Benutzermodule individuell eingefügt und entnommen werden können, und wobei dieses weitere Fach (B) einen getrennten Gerätestecker für jedes Benutzermodul (2) enthält, und dass Führungsmittel (3) vor dem Stecker jedes Benutzermoduls (2) vorhanden sind.

6. Ein Anschlussblock (10) nach Anspruch 5, **dadurch gekennzeichnet, dass** das Fach und das weitere Fach in Projektionsansicht gesehen nebeneinander liegen.

7. Ein Anschlussblock (10) nach einem der vorhergehenden Ansprüche, **dadurch gekennzeichnet, dass** die Führungsmittel (3) auch beim Abnehmen des passenden Steckers (1A) von dem Stecker (2A) des mindestens einen Benutzermoduls (2) verwendet werden können.

8. Ein Verfahren zum Bilden eines Anschlussblocks (10) zum Anschließen von Geräten an Lichtleitfasern (1), wobei in diesem Anschlussblock (10) Signale, die von Lichtleitfasern (1) empfangen werden, in elektrische Signale, die für die jeweiligen Geräte geeignet sind, anhand mindestens eines Benutzermoduls (2) umgewandelt werden, wobei der Anschlussblock (10) im zusammengebauten Zustand eine geschlossene kastenartige Einheit (11) bildet, die das mindestens eine Benutzermodul (2) umfasst, und wobei das mindestens eine Benutzermodul (2) mit einem Stecker (2A) versehen ist, mit dem ein passender Stecker (1A), der mit einer Lichtleitfaser (1) versehen ist, zusammengefügt wird, **dadurch gekennzeichnet, dass** die Einheit (11) mit Führungsmitteln (3) versehen ist, wobei sich diese Mittel gegenüber dem Stecker (2A) des mindestens einen Benutzermoduls (2) befinden, nachdem dieses mindestens eine Benutzermodul (2) in die kastenartige Einheit (11) eingebaut wurde, und wobei durch diese Mittel der passende Stecker (1A) mit der Faser (1) zu dem Stecker (2A) geführt wird und auf mindestens teilweise mechanisierte Art und Weise daran angeschlossen wird, die Führungsmittel (3) eine manuelle Verschiebung des passenden Steckers (1A) von einer ersten Position, die von dem Benutzermodul (2) entfernt ist, in eine zweite Position, in welcher der passende Stecker (1A) in den Stecker (2A) eingefügt ist, ermöglichen, wobei das Führungsmittel (3) mit einer Schiene (3A) versehen ist, mit welcher der passende Stecker (1A) mit der Lichtleitfaser gekoppelt ist, die Schiene (3A) röhrenförmig ist, der passende Stecker (1A) mit der Faser (1) darin bereitgestellt wird, die röhrenförmige Schiene (3A) mindestens auf einer Längsseite mit einer Schlitzöffnung versehen ist, durch die der passende Stecker (1A) derart zugänglich ist, dass dieser Stecker manuell durch die röhrenförmige Schiene (3A) verschoben werden kann, das Führungsmittel (3) auch mit einem Klemmkörper versehen ist, in dem der passende Stecker (1A) mit der Faser (1) aufgenommen ist, und der Klemmkörper mit einem Vorsprung versehen ist, der als Griff dient, der durch die Schlitzöffnung von der röhrenförmigen Schiene (3A) vorsteht und mit Gleitmöglichkeit in die Schiene (3A) passt.

## Revendications

1. Une borne (10) d'un réseau de guide d'ondes optique pour connecter des appareils à des fibres optiques (1), dans laquelle borne des signaux reçus à partir de fibres optiques (1) sont convertis en signaux électriques appropriés pour lesdits appareils au moyen d'au moins un module utilisateur (2), dans laquelle la borne (10) dans l'état assemblé forme une unité de type boîte fermée (11) qui comprend l'au moins un module utilisateur (2) et dans laquelle l'au moins un module utilisateur (2) est pourvu d'un connecteur (2A) auquel un connecteur complémentaire (1A) pourvu d'une fibre optique (1) est joint, **caractérisée en ce que** la borne (10) est pourvue de moyens de guidage (3), lesquels moyens sont situés en face du connecteur (2A) de l'au moins un module utilisateur (2) après que cet au moins un module utilisateur (2) a été monté dans l'unité de type boîte, et par lesquels moyens le guidage du connecteur complémentaire (1A) avec la fibre (1) jusqu'au connecteur (2A) et la connexion de l'un à l'autre sont mécanisés au moins en partie, dans laquelle
- les moyens de guidage (3) comprennent un rail (3A) auquel le connecteur complémentaire (1A) avec la fibre de verre (1) est couplé,
- le rail (3A) est de forme tubulaire, le connecteur complémentaire (1A) avec la fibre (1) est présent dans celui-ci, et le rail tubulaire (3A) est pourvu, sur au moins un côté longitudinal, d'une ouverture rainurée à travers laquelle le connecteur complémentaire (1A) est accessible de sorte que ce connecteur puisse être déplacé manuellement à travers le rail tubulaire (3A),
- les moyens de guidage (3) comprennent un corps de serrage (3B) dans lequel le connecteur complémentaire (1A) avec la fibre (1) est logé et qui est pourvu d'une saillie servant de poignée qui fait saillie à travers l'ouverture rainurée à partir du rail tubulaire (3A) et s'ajuste dans le rail (3A) avec une possibilité de coulissement, et
- les moyens de guidage (3) rendent possible un déplacement manuel du connecteur complémentaire (1A) à partir d'une première position éloignée du module utilisateur (2) dans une seconde position dans laquelle le connecteur complémentaire (1A) est inséré dans le connecteur (2A).

2. Une borne (10) selon une quelconque des revendications précédentes, **caractérisée en ce que** les moyens de guidage (3) sont fixés à une plaque (4) qui forme une plaque couvercle pour un compartiment (A) de l'unité à l'intérieur duquel une partie bouclée de la fibre (1) est présente.

3. Une borne (10) selon la revendication 2, **caractérisée en ce que** la plaque couvercle est fixée à l'unité (11) de manière séparable et pivotante.

4. Une borne (10) selon la revendication 2 ou 3, **caractérisée en ce que** la plaque couvercle et le rail tubulaire (3A) sont faits du même matériau en résine synthétique transparente.

5. Une borne (10) selon une quelconque des revendications précédentes, **caractérisée en ce que** l'unité de type boîte (11) comprend un compartiment supplémentaire (B) dans lequel une pluralité de modules utilisateurs (2) pour des appareils destinés à être connectés est présente, lesquels modules utilisateurs peuvent être individuellement insérés et retirés, et lequel compartiment supplémentaire (B) contient un connecteur d'appareil séparé pour chaque module utilisateur (2), et **en ce que** des moyens de guidage (3) sont présents devant le connecteur de chaque module utilisateur (2).

6. Une borne (10) selon la revendication 5, **caractérisée en ce que** le compartiment et le compartiment supplémentaire se trouvent côte à côte en vue en projection.

7. Une borne (10) selon une quelconque des revendications précédentes, **caractérisée en ce que** les moyens de guidage (3) peuvent également être utilisés dans la séparation du connecteur complémentaire (1A) à partir du connecteur (2A) de l'au moins un module utilisateur (2).

8. Un procédé de formation d'une borne (10) pour connecter des appareils à des fibres optiques (1), dans laquelle borne (10) des signaux reçus à partir de fibres optiques (1) sont convertis en des signaux appropriés pour les appareils respectifs au moyen d'au moins un module utilisateur (2), dans lequel la borne (10), dans l'état assemblé, forme une unité de type boîte fermée (11) qui comprend l'au moins un module utilisateur (2) et dans lequel l'au moins un module utilisateur (2) est pourvu d'un connecteur (2A) auquel un connecteur complémentaire (1A) pourvu d'une fibre optique (1) est joint, **caractérisé en ce que** l'unité (11) est pourvue de moyens de guidage (3), lesquels moyens sont situés en face du connecteur (2A) de l'au moins un module utilisateur (2) après que cet au moins un module utilisateur (2) a été monté dans l'unité de type boîte (11), et par lesquels moyens le connecteur complémentaire (1A) avec la fibre (1) est guidé vers le connecteur (2A) et est connecté à celui-ci de manière au moins partiellement mécanisée, les moyens de guidage (3) rendent possible un déplacement manuel du connecteur complémentaire (1A) à partir d'une première position éloignée du module utilisateur (2) dans une seconde position dans laquelle le connecteur complémentaire (1A) est inséré dans le connecteur (2A), dans lequel les moyens de guidage (3) sont pourvus d'un rail (3A) auquel le connecteur complémentaire (1A) avec la fibre de verre est couplé, le rail (3A) est de forme tubulaire, le connecteur complémentaire (1A) avec la fibre (1) est prévu dans celui-ci, le rail tubulaire (3A) est pourvu, sur au moins un côté longitudinal, d'une ouverture rainurée à travers laquelle le connecteur complémentaire (1A) est accessible de sorte que ce connecteur puisse être déplacé manuellement à travers le rail tubulaire (3A), les moyens de guidage sont également pourvus d'un corps de serrage dans lequel le connecteur complémentaire (1A) avec la fibre (1) est logé et le corps de serrage est pourvu d'une saillie servant de poignée qui fait saillie à travers l'ouverture rainurée à partir du rail tubulaire (3A) et s'ajuste dans le rail (3A) avec une possibilité de coulissement.
